# EUROPEAN PATENT SPECIFICATION

(11) **EP 4 425 031 B1**
(45) Date of publication and mention of the grant of the patent: **01.04.2026**
(21) Application number: 23159254.4
(22) Date of filing: 28.02.2023
(51) Int. Cl.: F16L 55/11, F16J 15/08, F16L 55/13, F16J 13/14, F16B 19/05

(54) **A SEALING PLUG ASSEMBLY, A METHOD OF MANUFACTURING THE SAME, AND A METHOD OF SEALING A HOLE IN A WORKPIECE WITH A SEALING PLUG ASSEMBLY**
VERSCHLUSSSTOPFENANORDNUNG, VERFAHREN ZUR HERSTELLUNG DAVON UND VERFAHREN ZUM ABDICHTEN EINES LOCHS IN EINEM WERKSTÜCK MIT EINER VERSCHLUSSSTOPFENANORDNUNG
ENSEMBLE BOUCHON D'ÉTANCHÉITÉ, SON PROCÉDÉ DE FABRICATION ET PROCÉDÉ DE SCELLEMENT D'UN TROU DANS UNE PIÈCE AVEC UN ENSEMBLE BOUCHON D'ÉTANCHÉITÉ

(43) Date of publication of application: 04.09.2024
(73) Proprietor: Avdel UK Limited, Woolston, Warrington, WA1 4RF (GB)
(72) Inventor: HERSANT, Carl, Letchworth Garden City, SG6 1LB (GB)
(74) Representative: SBD IPAdmin

(56) References cited:
- EP-B1- 0 328 314
- GB-B- 2 094 928
- GB-B- 2 381 301
- US-A1- 2022 213 916

## Description

### FIELD

The present disclosure relates to a sealing plug assembly, a method of manufacturing the same, and a method of sealing a hole in a workpiece with a sealing plug assembly.

### BACKGROUND

Sealing plugs are used in automotive engine and transmission applications for plugging holes in workpieces. For example, sealing plugs are used for plugging cross-holes of oil feed or coolant pathways in engine blocks, cylinder head and gearbox castings.

One known sealing plug is shown in GB 2 094 928 B which shows a plug assembly and method of plugging a passage. The plug has a tapered hollow stem head which collapses radially inwards as it is drawn into the hole. This plug requires a complex geometry which increases the complexity of manufacturing. For example, the plug requires cold-heading and thread-rolling as well as heat treatment to ensure the functionality of the hollow head and stem.

Another known sealing plug is shown in GB 2 381 301 B which shows a sealing plug for blind installation. This plug has a sleeve which is axially compressed between a stem head and a tool nose tip. As the sleeve is foreshortened, the sleeve expands radially and seals the hole. The head comprises an annular ring to provide leak resistance between the stem and the sleeve.

EP 0 328 314 B1 discloses a blind rivet for anchoring in relatively soft material, such as softwood. The rivet comprises a tubular shell having a preformed head at one end and a weakened expandible portion at the other end, and a stem extending through the shell. The expandible portion has a thinner wall than the adjacent part of the shell and includes circumferentially spaced weakened zones. The stem has an expander head which, when the rivet is placed and tension is applied to the stem, enters and splits the weakened portion into legs that expand outwardly to anchor the rivet. The stem breaks at a breakneck after the legs have been formed, confining the expansion to the end portion of the shell while leaving the remainder of the shell shank substantially unexpanded.

A problem is that modern automotive requires smaller and lighter powertrains. This means that the sealing applications are also required to be smaller with shallower holes to be plugged. An issue with this design is that the installed length of the plug is particularly long (for instance, around one point two times the diameter of the hole to be sealed). Besides, another problem in the plug described in GB 2 381 301 B is that some damage can occur to the sealing plug sleeve before the sealing operation of a hole in a workpiece if the sealing plug is not carefully positioned first.

### SUMMARY

Examples of the present disclosure aim to address the aforementioned problems.

According to an aspect of the present disclosure there is a sealing plug assembly for sealing a hole in a workpiece according to claim 1. Such sealing plug assembly is adapted to have a compact size when installed in the hole and requires a low placing force for a given size of hole. This means less impact on the setting tool and therefore less damage to the setting tool over time. The interference fit in the second bore portion ensures the attachment of both sleeve and stem in a secure way and the arrangement with the first stem diameter being less than the first bore diameter allows a clearance between the sleeve and the stem which decrease the risks of damage to the sleeve during the installation.

The present invention is also directed to a method of manufacturing a sealing plug assembly as described and to a method of sealing a hole in a workpiece using such sealing plug assembly.

### BRIEF DESCRIPTION OF THE DRAWINGS

Various other aspects and further examples are also described in the following detailed description and in the attached claims with reference to the accompanying drawings, in which:
Figure 1 shows a perspective view of a sealing plug assembly according to an example;
Figure 2 shows side cross-sectional view of a stem of a sealing plug assembly according to an example;
Figures 3 and 4 show close-up cross-sectional views of a stem of a sealing plug assembly according to an example;
Figure 5A shows a cross-sectional view of a sleeve of a sealing plug assembly according to an example;
Fig. 5B shows a cross-sectional view of a sleeve of a sealing plug assembly according to another example;
Figures 6 and 7 respectively show side cross-sectional view and a close-up cross-sectional view of a sealing plug assembly according to an example with the sleeve of Fig. 5A; and
Figures 8 to 18 show cross-sectional side views of a sealing plug assembly in different stages of manufacture and use in a sealing operation.

### DETAILED DESCRIPTION

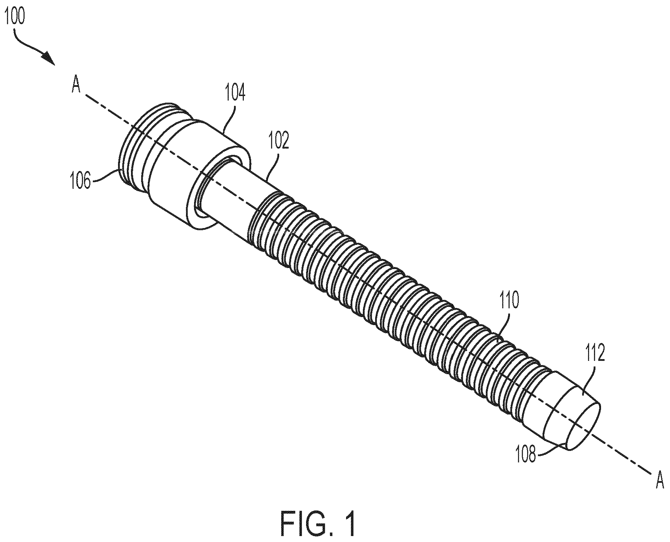

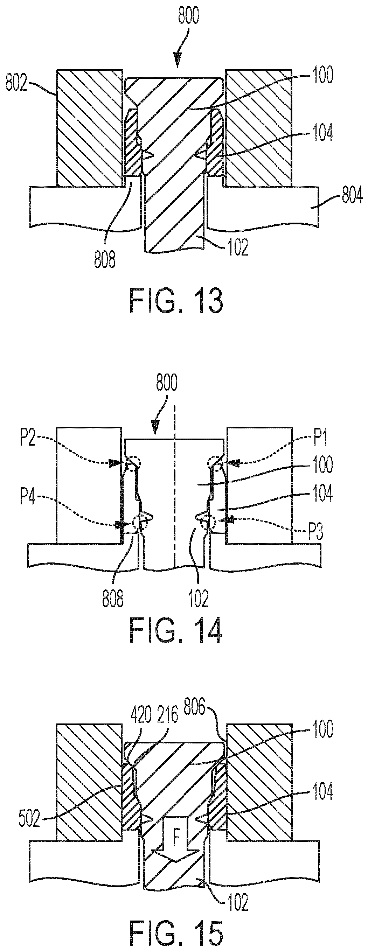

Figure 1 shows a perspective view of a sealing plug assembly 100. The sealing plug assembly 100 comprises a stem 102 and a sleeve 104. The sealing plug assembly 100 is configured to seal a hole 800 in a workpiece 802 (best shown in Figure 13).

The stem 102 comprises a head 106 and a tail 108 and extends along a longitudinal axis A-A. In some examples, the stem 102 is made from steel and the sleeve 104 is made from aluminium. The stem 102 is made from steel without heat-treatment. In an embodiment, the stem 102 can be made from steel with heat-treatment. For instance, a heat treatment can be introduced to control the break load and the correct fracture of a stem breaker groove region (as disclosed below). This means that the stem 102 does not comprise hardened steel. In some other examples, the stem 102 and the sleeve 104 are made from other materials and the stem 102 and the sleeve are respectively made from a first material and a second material whereby the first material is harder than the second material.

The tail 108 of the stem 102 optionally comprises a plurality of annular pull grooves 110. For the purposes of clarity only one of the annular pull grooves 110 has been labelled in Figure 1. The annular pull grooves 110 are configured to engage with placing tool pulling jaws 804 (best shown in Figure 13) in order to increase the friction between the tail 108 and the placing tool pulling jaws 804. The placing tool pulling jaws 804 are configured to exert a longitudinal force on the stem 102 along the longitudinal axis A-A away from the head 106 during a sealing operation. The placing tool pulling jaws 804 are known and will not be discussed in any further detail. The sealing operation is discussed in more detail below with respect to Figures 13 to 17.

The end of the tail 108 comprises a tail chamfer 112. The tail chamfer 112 helps align the sealing plug assembly 100 in tool nose tips 808 of the placing tool pulling jaws 804 before a sealing operation.

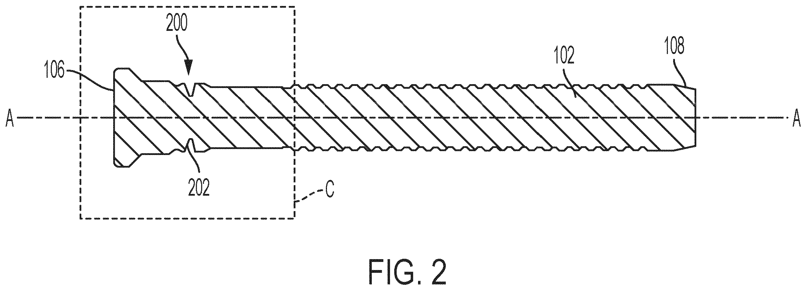

Figure 2 shows a cross-sectional side view of the stem 102. The stem 102 comprises a weakened portion 200 located between the head 106 and the tail 108 along the longitudinal axis A-A. As shown in Figure 2, the weakened portion 200 is an annular breaker groove 202. The annular breaker groove 202 is V-shaped and configured to break when a load exerted on the stem 102 in a direction along the longitudinal axis A-A exceeds a threshold pulling force. In the example of a sealing plug assembly 100 adapted to suit an Ø8mm (8 millimetres in diameter) hole, the weakened portion 200 is configured to break when the threshold pulling force falls within the range of 10.6 kiloNewtons (kN) to 13.1kN. However, the sealing plug assembly 100 may be configured to suit holes having several diameters, and for example holes having a diameter between 4 millimetres and 22 millimetres. The pulling force may change depending on the dimensions of the sealing plug assembly 100. When the weakened portion 200 breaks, the tail 108 is removed.

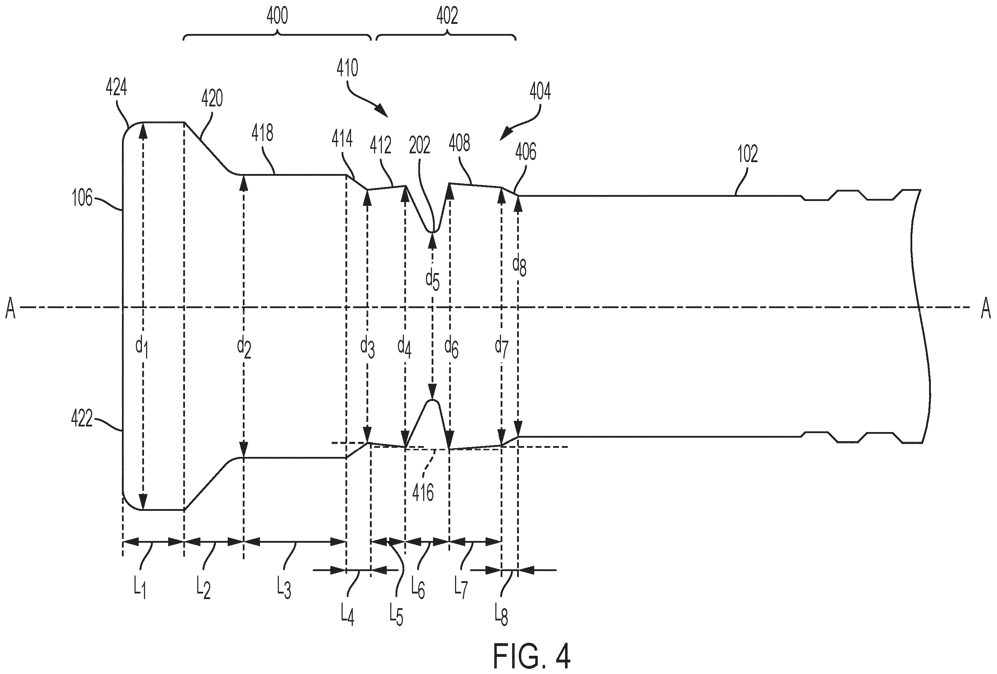

As mentioned above, the weakened portion 200 is an annular breaker groove 202 with a breaker groove diameter d₅ (as shown in Figure 4). The breaker groove diameter d₅ is substantially smaller than a diameter of other parts of the stem 102 e.g. a diameter d₈ of the tail 108. In this way, the weakened portion 200 is provided by having a section of the stem 102 which has a smaller diameter d₅. However, in some other examples, the weakened portion 200 can be provided with other methods. For example, it could be a localised zone of lower strength material achieved by induction band annealing, or it may have a different cross-sectional shape of the stem 102 at the weakened portion 200. In some examples, the weakened portion 200 is not a circumferential groove, but instead the groove is partially circumferential. It may alternatively be of a square cross section, provided by four equally-spaced vee-notches indented into the stem at position 200. Nevertheless, in a preferred example, the weakened portion 200 is an annular breaker groove 202 and the weakened portion 200 will be referred as the annular breaker groove 202 hereinafter.

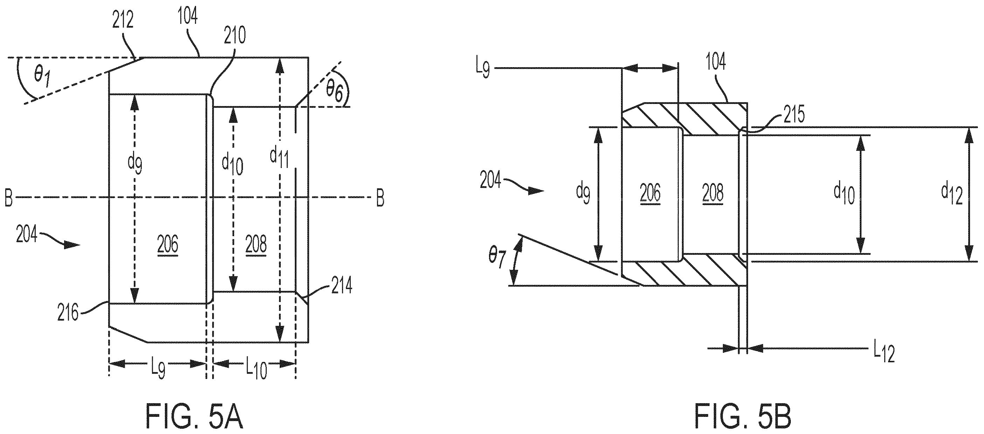

Figure 1 shows the sleeve 104 mounted on the stem 102. The sleeve 104 will be discussed in more detail with respect to Figure 5A and Fig. 5B. Figure 5A and Figure 5B show a side cross-sectional view of the sleeve 104 according to a first and a second embodiment. The sleeve 104 is hollow and comprises an internal bore 204 which extends along a sleeve axis B-B. The internal bore 204 comprises a first bore portion 206 and a second bore portion 208. The first bore portion 206 transitions to the second bore portion 208 at a bore shoulder portion 210.

The first bore portion 206 has a first bore portion mouth 216 and the first bore portion 206 extends along the sleeve axis B-B a distance L₉ and comprises a first bore diameter d₉. The second bore portion 208 extends along the sleeve axis B-B a distance L₁₀ and comprises a second bore diameter d₁₀. The first and second bore portions 206, 208 are cylindrical and comprise a constant diameter along their lengths. The first bore portion 206 has a diameter d₉ which is greater than the diameter d₁₀ of the second bore portion 208. The different diameters d₉, d₁₀ of the first bore portion 206 and the second bore portion 208 allow the sleeve 104 to be mounted and held in a specific orientation and position with respect to the stem 102. For example a ratio of the first bore diameter d₉ to the second bore diameter d₁₀ is between 1 and 1. 18.

In some examples, the first bore portion 206 and the second bore portion 208 have a similar length along the sleeve axis B-B. That is, the distances L₉ and L₁₀ are equal. Alternatively, in some other less preferred examples, the distances L₉ and L₁₀ are not equal. For example, L₉ is greater than L₁₀ or L₉ is less than L₁₀.

The sleeve 104 comprises an outer sleeve chamfer 212. The outer sleeve chamfer 212 is arranged to face the hole 800 when mounted on the stem 102 and when the sealing plug assembly 100 is inserted into the hole 800 in the workpiece 802. The outer sleeve chamfer 212 allows for easier guidance of the sealing plug assembly 100 into the hole 800 during a sealing operation (for instance a square-shaped edge instead of the chamfer 212 could catch on the edge of the hole being sealed) Furthermore, the outer sleeve chamfer 212 means that the sleeve 104 can be easily orientated by production machinery during assembly of the sleeve 104 onto the stem 102. The outer sleeve chamfer 212 is inclined to the sleeve axis B-B by an angle θ₇. In some examples, θ₇ is 22 degrees. In some other examples, θ₇ is between 10 to 30 degrees or 20 to 25 degrees. As described in further details below the outer sleeve chamfer also allows to decrease the amount of material and improve the material distribution and smooth flow during the setting step.

The sleeve 104 also optionally comprises an inner sleeve chamfer 214, as depicted in Figure 5A. The inner sleeve chamfer 214 is arranged to face the tail 108 when mounted on the stem 102. The inner sleeve chamfer 214 is inclined to the sleeve axis B-B by an angle θ₆. In some examples, θ₆ is 45 degrees. In some other examples, θ₆ is between 35 to 55 degrees or 40 to 50 degrees.

In another embodiment, shown in Figure 5B, the sleeve comprises a counterbore 215. The counterbore 215 is small and shallow. The counterbore 215 is arranged to face the tail 108 when mounted on the stem 102. The depth L₁₂ of the counterbore 215 might be for example between 3% and 10% and for instance of about 6%-7% of the total axial length of the sleeve. The diameter d₁₂ of the counterbore 215 might be about 80% to 90% of the sleeve diameter d11.

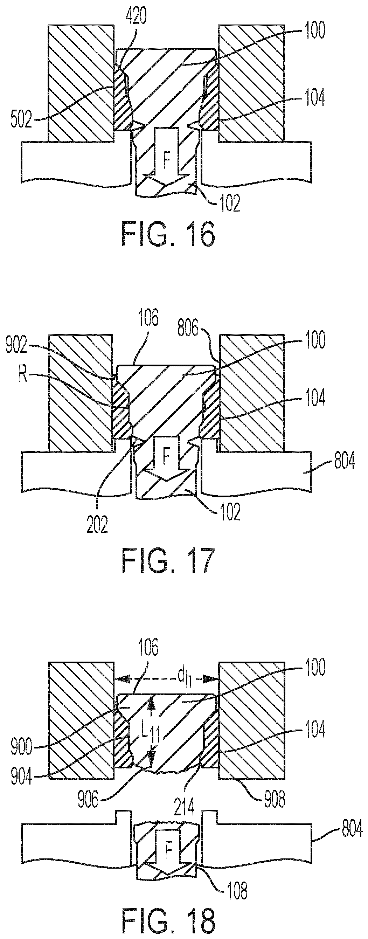

The inner sleeve chamfer 214 (as depicted in Figure 5A) or the counterbore 215 (as depicted in Figure 5B) allows for a cleaner break of the tail 108 from the stem 102 during a sealing operation. This will be described in more detail below in reference to Figure 17.

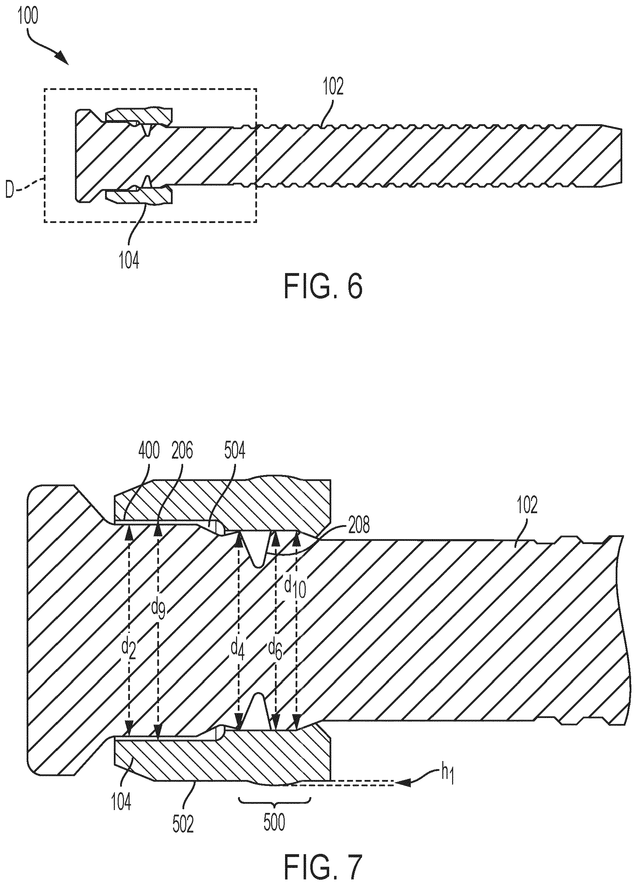

The sleeve 104 is arranged to be mounted on the stem 102 as shown in Figures 6 and 7. When the sleeve 104 is mounted on the stem 102, the sleeve axis B-B is concentrically aligned with the longitudinal axis A-A. The sleeve 104 shown in Figures 6 and 7 correspond to the sleeve of Figure 5A. However, in other embodiments, the sleeve 104 may also correspond to the sleeve shown in Figure 5B.

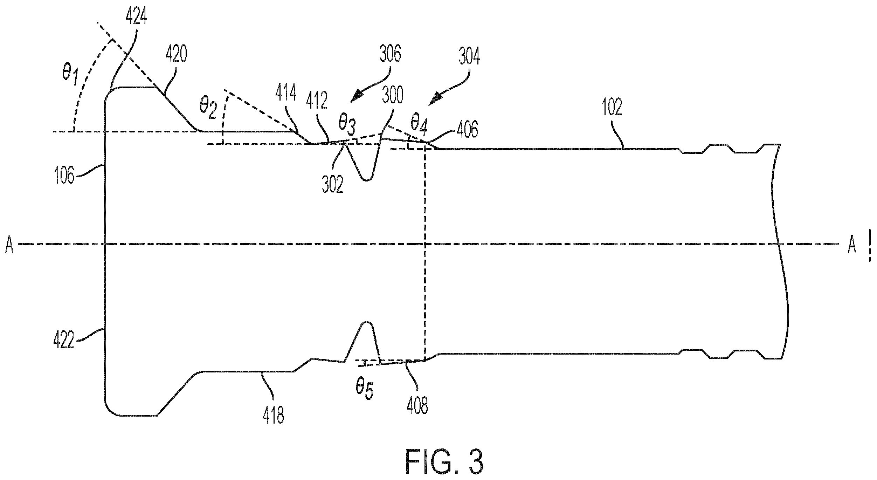

Before discussing the sealing plug assembly 100 as shown in Figures 6 and 7, the stem 102 will be discussed in more detail with reference to Figures 3 and 4.

Figures 3 and 4 show close-up side cross-sectional views of the stem 102 corresponding to the dotted box labelled C in Figure 2. The stem 102 comprises a plurality of different diameters, tapers and surfaces for providing the functionality discussed herein.

The stem 102 comprises a plugging portion 400 positioned between head 106 and the annular breaker groove 202 as shown in Figure 4. The plugging portion 400 is configured to facilitate plugging of the hole 800 in the workpiece 802 with the sleeve 104 during the sealing operation. When the head 106 is drawn towards the sleeve 104 due to the pulling force on the stem 102, the plugging portion 400 is configured to compress and deform the sleeve 104 against the hole 800. When the sleeve 104 is mounted on the stem 102 before the sealing operation, there is a clearance between the plugging portion 400 of the stem 102 and the first bore portion 206.

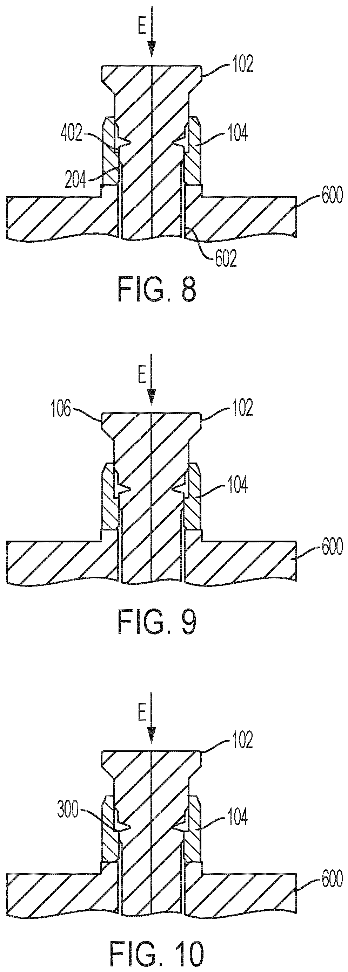

The stem 102 further comprises a sleeve gripping portion 402 which is adjacent to the plugging portion 400. The sleeve gripping portion 402 is configured to receive and hold the sleeve 104 in a predetermined position on the stem 102 before the sealing operation. The sleeve 104 is mounted to the sleeve gripping portion 402 in a sealing plug assembly 100 manufacturing operation which is discussed in more detail below with reference to Figures 8 to 12. Specifically, the sleeve gripping portion 402 is configured to position and hold the sleeve 104 in the correct position with respect to the plugging portion 400 such that the sleeve 104 maintains the correct orientation and position with respect to the plugging portion 400 when an axial pulling force is applied to the stem 102. The sleeve gripping portion 402 is between the plugging portion 400 and the tail 108 as shown in Figures 3 and 4.

The annular breaker groove 202 as shown in Figure 4 is located within the sleeve gripping portion 402. This means that when the sleeve 104 is mounted on the stem 102 before the sealing operation, the sleeve 104 overlaps the annular breaker groove 202. More particularly, when the sleeve 104 is mounted on the stem 102 before the sealing operation, the second bore portion 208 of the sleeve 104 overlaps the weakened portion 200 (or annular breaker groove 202). The annular breaker groove 202 comprises an axial length of L₆ as shown in Figure 4. Since the annular breaker groove 202 comprises a "V" shape, the walls of the annular breaker groove 202 are steep and nearly perpendicular to the longitudinal axis A-A.

On a first side 404 of the sleeve gripping portion 402, the sleeve gripping portion 402 comprises a gripping portion lead-on taper 406 and a gripping portion shallow ramp 408. The gripping portion lead-on taper 406 and the gripping portion shallow ramp 408 provide a first stem gripping surface 304 on the first side 404 configured to grip the sleeve 104. The gripping portion lead-on taper 406 and the gripping portion shallow ramp 408 are positioned between the annular breaker groove 202 and the tail 108. The gripping portion lead-on taper 406 is positioned closer to the tail 108 than the gripping portion shallow ramp 408 in the direction of the longitudinal axis A-A.

The gripping portion lead-on taper 406 is substantially frusto-conical in shape and varies from a diameter d₈ adjacent to the tail 108 to another diameter d₇ adjacent to the gripping portion shallow ramp 408 along an axial length L₈. As shown in Figure 3, the gripping portion lead-on taper 406 is inclined to the longitudinal axis A-A by an angle θ₄. In some examples, θ₄ is 20 degrees. In some other examples, θ₄ is between 15 to 25 degrees or 15 to 35 degrees.

The gripping portion shallow ramp 408 is also substantially frusto-conical in shape and varies from a diameter d₇ adjacent to the gripping portion lead-on taper 406 to another diameter d₆ adjacent to the annular breaker groove 202 along an axial length L₇. As shown in Figure 3, the gripping portion shallow ramp 408 is inclined to the longitudinal axis A-A by an angle θ₅. In some examples, θ₅ is 25 degrees. In some other examples, θ₅ is between 5 to 30 degrees.

A first sharp transition 300 is caused by an intersection of the gripping portion shallow ramp 408 and the annular breaker groove 202. The first sharp transition 300 presents a relatively sharp edge which helps resist movement of the sleeve 104 with respect to the stem 102. For example, when the pulling force is applied to the stem 102, the first sharp transition 300 engages with the internal bore 204 of the sleeve 104. The first sharp transition 300 forms for instance a lock (by interference fit) with the sleeve 104 in the region of the second bore portion 208. More particularly, when the sleeve 104 is mounted on the stem 102 before the sealing (or setting) operation, the first sharp transition 300 forms the single lock between the sleeve 104 and the stem. In other words, the first sharp transition 300 is the single point of contact between the sleeve 104 and the stem 102 in a mounted position of the sleeve on the stem and before applying a pulling force to the stem (the setting operation).

In some examples, the length L₇ of the gripping portion shallow ramp 408 is greater than the length L₈ of the gripping portion lead-on taper 406.

In some examples, the length L₇ of the gripping portion shallow ramp 408 is greater than the length L₆ of the annular breaker groove 202.

On a second side 410 of the sleeve gripping portion 402, the sleeve gripping portion 402 comprises a gripping portion decreasing taper 412. The gripping portion decreasing taper 412 is similar to the gripping portion shallow ramp 408 and comprises a shallow taper. The gripping portion decreasing taper 412 is not configured to grip the sleeve 104 when the sleeve 104 is mounted on the stem 102 before the sealing (or setting) operation. Apart from the first sharp transition 300, there is a clearance between the sleeve and the rest of the sleeve gripping portion.

The gripping portion decreasing taper 412 is substantially frusto-conical in shape and varies from a diameter d₄ adjacent to the annular breaker groove 202 to a diameter d₃ adjacent to a plugging portion lead-on taper 414 of the plugging portion 400 along an axial length L₅. As shown in Figure 3, the gripping portion decreasing taper 412 is inclined to the longitudinal axis A-A by an angle θ₃.

In some examples, the length L₇ of the gripping portion shallow ramp 408 is greater than the length L₅ of gripping portion decreasing taper 412.

The maximum diameter d₄ of the gripping portion decreasing taper 412 is less than the maximum diameter d₆ of the gripping portion shallow ramp 408. The difference between the maximum diameter d₄ and the maximum diameter d₆ is shown in Figure 4 with gripping surfaces difference 416. Since the gripping portion decreasing taper 412 has a maximum diameter d₄ less than the maximum diameter d₆ of the gripping portion shallow ramp 408, a second sharp transition 302 (as shown in Figure 3), does not scrape the internal bore 204 of the sleeve 104 when the sleeve 104 is mounted to the stem 102 during the manufacturing operation of the sealing plug assembly 100. The second sharp transition 302 is caused by an intersection of the gripping portion decreasing taper 412 and the annular breaker groove 202.

The maximum diameter of the sleeve gripping portion 402 e.g. the diameter d₆ of the gripping portion shallow ramp 408 is less than the diameter d₉ of the first bore portion 206. This means that the sleeve gripping portion 402 does not scratch the first bore portion 206 during assembly of the sealing plug assembly 100.

The plugging portion 400 comprises the plugging portion lead-on taper 414 which is adjacent to the sleeve gripping portion 402. The plugging portion lead-on taper 414 is substantially frusto-conical in shape and varies from a diameter d₃ adjacent to the gripping portion decreasing taper 412 to another diameter d₂ of the cylindrical plugging portion 418 along an axial length L₄. As shown in Figure 3, the plugging portion lead-on taper 414 is inclined to the longitudinal axis A-A by an angle θ₂. In some examples, θ₂ is 20 degrees. In some other examples, θ₂ is between 15 to 25 degrees or 10 to 30 degrees.

In some examples, the length L₅ of gripping portion decreasing taper 412 is greater than the length L₄ of the plugging portion lead-on taper 414.

The plugging portion 400 also comprises the cylindrical plugging portion 418. The cylindrical plugging portion 418 extends along an axial length of L₃. The surface of the cylindrical plugging portion 418 is parallel with the longitudinal axis A-A. A steep flank portion 420 leads from the cylindrical plugging portion 418 to the head 106. The plugging portion 400 also comprises the steep flank portion 420.

In some examples, the length L₃ of the cylindrical plugging portion 418 is greater than the length L₄ of the plugging portion lead-on taper 414.

The steep flank portion 420 varies from a diameter d₂ adjacent to the cylindrical plugging portion 418 to another diameter d₁ of the head 106 along an axial length L₂. As shown in Figure 3, the steep flank portion 420 is inclined to the longitudinal axis A-A by an angle θ₁. In some examples, θ₇ is between 45 and 55 degrees. More particularly θ₁ is between 47 and 52 degrees. For example θ₁ is about 49.5 degrees or 50 degrees. The angle θ₁ between the steep flank portion 420 and the longitudinal axis A-A shall be not too shallow and not too steep in order to allow a smooth motion of the material during the setting, a reduced length of the entire sealing plug assembly 100 and to prevent the material of the sleeve 104 to protrude from the head 106 after the setting of the sealing plug assembly 100 in the hole.

The head 106 comprises a diameter d₁ and extends along an axial length L₁. The head 106 comprises a flat head surface 422 in order to keep the length of the sealing plug assembly 100 to a minimum. The head 106 optionally comprises a radiused edge 424. The radiused edge 424 is configured to help guide the sealing plug assembly 100 into the hole 800. In some examples, the radiused edge 424 is alternatively a chamfered edge. The diameter d₁ of the head 106 may be sensibly similar to the sleeve diameter d₁₁. This prevents some damage to the sealing plug sleeve before the sealing operation of a hole in a workpiece. Indeed, when the diameter of the sleeve is much bigger than the stem head 106, damages may occur to the sleeve if the sealing plug is not carefully positioned first.

In some examples, the length L₁ of the head 106 is the same as the length L₂ of the steep flank portion 420.

The sealing plug assembly 100 after manufacture is best shown in Figures 6 and 7. Here the sleeve 104 has been mounted to the stem 102 and the sealing plug assembly 100 is ready to be inserted into the hole 800. When the sealing plug assembly 100 is assembled, the sleeve 104 is press-fit onto the stem 102. As mentioned above, the interference-fit (or lock) occurs in the region of the first sharp transition 300 (for the stem) and the second bore portion 208 (for the sleeve). The outer sleeve chamfer 212 allows the sleeve 104 to be easily orientated by production machinery during assembly of the sleeve 104 onto the stem 102.

The plugging portion 400 and the cylindrical plugging portion 418 comprises a maximum diameter of d₂. As shown in Figure 7, the diameter d₂ of the plugging portion 400 is smaller than the first bore diameter d₉ of the first bore portion 206. In this way, at least a portion e.g. cylindrical plugging portion 418 of the plugging portion 400 is arranged to be received within the first bore portion 206. A clearance is arranged between the first bore portion 206 and the plugging portion 400. Accordingly, the internal bore 204 remains undamaged by rubbing or scraping on the stem 102 by the plugging portion 400 when the sleeve 104 is mounted on the stem 102.

The sleeve gripping portion 402 has a widest point adjacent to the annular breaker groove 202. This means that the sleeve 104 when mounted to the stem 102 during the manufacture of the sealing plug assembly 100 is engaged in the internal bore 204 adjacent to the annular breaker groove 202. Furthermore, the maximum diameter d₆ of the gripping portion shallow ramp 408 is greater than the second bore diameter d₁₀ of the second bore portion 208.

This means that the sleeve gripping portion 402 provides an interference fit with the sleeve 104 when the sleeve 104 is mounted on the stem 102, and in the region of the maximum diameter d₆ of the gripping portion shallow ramp 408. Since the sleeving gripping portion 402 comprises conical sections, the sleeve 104 is inherently orientated with the sleeve axis B-B parallel to the longitudinal axis A-A whilst holding the position of the sleeve 104 overlapping the annular breaker groove 202.

In some examples, the interference fit between the sleeve 104 and the sleeve gripping portion 402 optionally causes a deformed outer sleeve portion 500 of the outer sleeve surface 502 to dilate and increase the sleeve diameter d₁₁ by height h₁ of the deformed outer sleeve portion 500. In all cases the dilated sleeve is still smaller than the hole 800 to ensure the outer surface of the sleeve is not scratched and damaged as the plug is guided into the hole to be sealed.

As mentioned above, the first sharp transition 300 engages the second bore portion 208 and prevents movement of the sleeve 104 towards the tail 108 of the stem 102 after assembly of the sealing plug assembly 100. Unlike the first sharp transition 300, the second sharp transition 302 does not scrape the second bore portion 208 during the assembly operation.

The gripping portion decreasing taper 412 and the adjacent plugging portion lead-on taper 414 provide a narrower portion of the stem 102. When the sleeve 104 is mounted to the stem 102, this provides an annular recess 504 between the stem 102 and the sleeve 104. The annular recess 504 advantageously provides a space for deformed sleeve material to flow into during the sealing operation as discussed below. The annular recess 504 helps the sealing plug 900 remain in the hole 800 after the annular breaker groove 202 has broken.

In some examples, the diameter d₁ of the head 106 and the sleeve d₁₁ are equal. In some other examples, the diameter of the sleeve d₁₁ may be slightly larger than the diameter d₁ of the head 106 if the deformed outer sleeve portion 500 has been dilated by distance h₁.

The assembly of the sealing plug assembly 100 will now be discussed in reference to Figures 8 to 12. Figures 8 to 12 show a side cross-sectional view of the sealing plug assembly 100 during a method of manufacture thereof. Figures 8 to 12 show a supporting bush 600 of assembly machinery used during the manufacture of the sealing plug assembly 100.

In Figure 8, the sleeve 104 has been placed on the supporting bush 600 and the internal bore 204 of the sleeve 104 is aligned with a bush hole 602. In Figure 8, the tail 108 of the stem 102 is inserted into the internal bore 204 and the bush hole 602. The sleeve gripping portion 402 is located within the first bore portion 206 and the sleeve gripping portion 402 rests on the bore shoulder portion 210. At this point there is no interference fit between the sleeve 104 and the stem 102.

In Figure 9, a downward force E is exerted on the head 106 and the gripping portion lead-on taper 406 is inserted into the second bore portion 208. At this point the gripping portion lead-on taper 406 engages with the second bore portion 208. As the stem 102 is pushed into the sleeve 104, the gripping portion lead-on taper 406 transitions to the gripping portion shallow ramp 408 as shown in Figure 10. At this point, both the gripping portion lead-on taper 406 and the gripping portion shallow ramp 408 are inserted into the second bore portion 208. In Figure 10 the first sharp transition 300 starts to engage the second bore portion 208. At this point, the sleeve gripping portion 402 optionally causes the deformed outer sleeve portion 500 of the outer sleeve surface 502 to dilate and increase the sleeve diameter d₁₁ by height h₁.

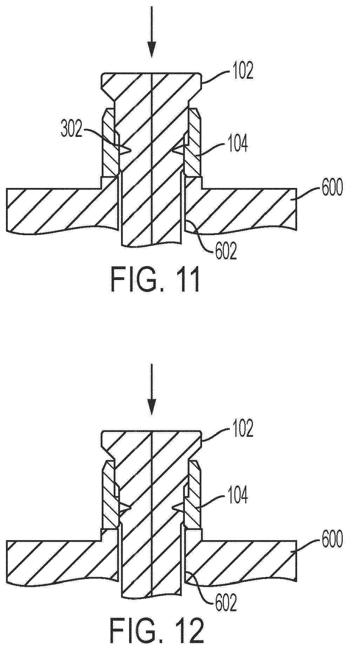

In Figure 11, the second sharp transition 302 is in line with the bore shoulder portion 210. Since the gripping portion decreasing taper 412 has a smaller diameter than the gripping portion shallow ramp 408, the second sharp transition 302 does not scrape the second bore portion 208. The stem 102 is pushed down until the gripping portion decreasing taper 412 is inserted into the second bore portion 208 as shown in Figure 12. At this point, the sleeve 104 has an interference fit with the sleeve gripping portion 402 of the stem 102. The interference fit occurs only in the region of the first sharp transition 300. A clearance remains between the plugging portion 400 of the stem 102 and the first bore portion 206.

The sleeve 104 is now mounted to the stem 102 in the arrangement as shown in Figures 6 and 7. As mentioned above, the plugging portion lead-on taper 414 remains in the first bore portion 206. The sealing plug assembly 100 as shown in Figures 6, 7 and 12 is now ready for insertion into a hole 800 of a workpiece 802 for a sealing operation.

The sealing operation of the sealing plug assembly 100 will now be described in reference to Figures 13 to 17. Figures 13 to 17 show a side cross-sectional view of the sealing plug assembly 100 during a method of sealing a hole 800 in a workpiece 802 with the sealing plug assembly 100.

The sealing plug assembly 100 has been inserted into the hole 800 with a tool and Figures 13 to 17 show the tool nose tips 808 of the placing tool pulling jaws 804. The tool nose tips 808 is configured to align and insert the sealing plug assembly 100 into the hole 800 and then exert the pulling force on the stem 102. In Figure 13, the sealing plug assembly 100 has been inserted into the hole 800, but the sealing operation has not started. In Figure 13, there is a point of contact between the sleeve and the stem 102 is in the region of the first sharp transition 300, as mentioned above.

In Figure 14 the tool exerts a pulling force on the stem 102 in the direction of the arrow F. This pulls the stem 102 and the head 106 towards the sleeve 104 which is supported by the tool nose tips 808. This causes the steep flank portion 420 to move towards the sleeve 104 and engages the sleeve 104 at the first bore portion mouth 216. As depicted schematically in Figure 14, there are four area of contact P1, P2, P3, P4.

In Figure 15, as the steep flank portion 420 moves into the first bore portion 206, the first bore portion mouth 216 is expanded radially outwards. This causes the outer sleeve surface 502 to engage the hole surface 806. More particularly, the edge of the outer sleeve surface between the outer sleeve chamfer 212 and the sleeve body first engages the hole surface 806.

At the same time the plugging portion lead-on taper 414 engages the second bore portion 208. The maximum diameter d₄ of the plugging portion lead-on taper **414 is greater** than the second bore diameter d₁₀. Accordingly, the plugging portion lead-on taper 414 starts to also radially deform the second bore portion 208.

As the tool continues exerting a pulling force on the stem 102, the outer sleeve chamfer 212 engages the hole surface 806. More particularly the outer sleeve chamfer 212 is deformed to contact the surface delimiting the hole 806.

In Figure 16 the steep flank portion 420 has fully entered the first bore portion 206 and the cylindrical plugging portion 418 has started to enter the second bore portion 208. At this point the radial expansion of the sleeve 104 causes the outer sleeve surface 502 to contact the hole surface 806 over much of the length of the sleeve 104.

In Figure 17, the sleeve 104 is axially compressed and an extruded portion 902 of the sleeve 104 has extruded around the head 106. The extruded portion 902 is between the hole surface 806 and the head 106, further sealing the hole 800. At this point the whole of the outer sleeve surface 502 is in contact with the hole surface 806. The first bore portion 206 and the second bore portion 208 has been compressed against the cylindrical plugging portion 418 due to the pressure of the sleeve 104 acting radially inwards. The extruded portion 902 does not protrude beyond the head 106. This feature is notably due to the different angles θ₁ and θ₇. The second sharp transition 302 is facing what was the inner sleeve chamfer 214 or the counterbore 215. More particularly the second sharp transition 302 is facing the end of the inner sleeve chamfer 214 or the counterbore 215. The material of the sleeve contacts the surface delimiting the hole 806 on one side and what was the plugging and gripping portions 400, 402 of the stem 102 on the other side. Eventually a small recess R can remain between the sleeve and the stem in the mounted state in the area of the bore shoulder portion 210. This recess could eventually act as a reservoir to receive a possible lubricant present on the plug during the setting of the plug.

In Figure 18, the annular breaker groove 202 has fractured and the sealing plug 900 remains in the hole 800 whilst the tail 108 is removed with the tool nose tips 808. Radial stresses in the material of the sleeve 104 hold the head 106 securely in the hole 800 due to frictional forces.

In addition, the material of the sleeve 104 has flowed into the optional annular recess 504 which is formed between the sleeve 104 and the stem 102 due to the gripping portion decreasing taper 412 and the adjacent plugging portion lead-on taper 414. The material flowing into the annular recess 504 creates a locking portion 904. The locking portion 904 together with the radial forces exerted by the compressed material of the sleeve 104 due to the cylindrical plugging portion 418 increase the frictional forces between the sealing plug 900 and the hole 800. This limits the recoil force exerted on the sealing plug 900 when the stem 102 breaks from dislodging sealing plug 900 with respect to the hole 800.

The sealing plug 900 as shown in Figure 18 is sub-flush and ensures that a fracture surface 906 of the annular breaker groove 202 is below the outer face 908 of the workpiece 802. This means that the fracture surface 906 is not vulnerable to accidental impact.

The inner sleeve chamfer 214 has decreased in size due to the sealing operation. The inner sleeve chamfer 214 projects around the edge of the fracture surface 906. Advantageously, the inner sleeve chamfer 214 or the counterbore 215 limits the burrs created at the sleeve 104 when the stem 102 breaks at the annular breaker groove 202. More particularly the inner sleeve chamfer 214 or the counterbore 215 limits material protrusion beyond the fracture surface 906.

When the sealing plug 900 is formed in the hole 800 as shown in Figure 18, there is positive radial pressure between the compressed sleeve 104, the head 106 and the hole 800. This means that an all-metal seal is created between the sealing plug 900 and the hole 800. The sealing plug assembly 100 can therefore provide a seal with respect to fluids such as oils, water, water-glycol coolants, compressed air, or any other suitable fluid.

In some examples, the distance between the head 106 and the annular groove is 90% of the diameter of the hole 800. That is sealing plug 900 after the sealing operation has a length L₁₁ which is 90% of the hole diameter dₕ. In some examples the sealing plug 900 after the sealing operation has a length L₁₁ which is 75%, 80%, 85%, 95%, 100%, 105%, 110%, 115% or 120% of the hole diameter dₕ.

The new sealing plug assembly 100 seeks to provide various advantages over previous sealing solutions. Firstly, the sealing plug assembly 100 has compact size when installed in the hole 800 due to both the short length of the sleeve 104 and the fact that most, or all, of the head 106 pulls inside of the sleeve 104 during placing. Finally, the head 106 being of a similar outer diameter to the sleeve 104 reduces the chance of the sleeve 104 catching the edge of the hole 800 to be plugged, and hence avoids damage of the soft metal sleeve 104 as the sealing plug assembly 100 is inserted into the hole 800, particularly when automated or robotic placing systems are employed.

Examples of the present disclosure have been discussed with particular reference to the examples illustrated. However, it will be appreciated that variations and modifications may be made to the examples described within the scope of the claims.

## Claims

1. A sealing plug assembly (100) for sealing a hole (800) in a workpiece (802) comprising:
a stem (102) having a head (106) and tail (108) and a weakened portion (200) located between the head (106) and the tail (108) and
a sleeve (104) mountable on the stem (102) and having an internal bore (204) having a first bore portion (206) and a second bore portion (208) wherein the first bore portion (206) has a first bore diameter (d₉) greater than a second bore diameter (d10) of the second bore portion (208); wherein:
the stem (102) has a plugging portion (400), which comprises a cylindrical plugging portion (418) having a first stem diameter (d₂), between the head (106) and the weakened portion (200) and wherein further the stem (102) has a sleeve gripping portion (402) having a second stem diameter (d₆) adjacent to the weakened portion (200) wherein the first stem diameter (d₂) is greater than the second stem diameter (d₆);
wherein the first stem diameter (d₂) is less than the first bore diameter (d₉) and at least a portion of the cylindrical plugging portion (418) is arranged to be
received within the first bore portion (206) and the second stem diameter (d₆) is greater than the second bore diameter (d10) and the sleeve gripping portion (402) is arranged to be received in an interference fit in the second bore portion (208);
wherein when the sealing plug assembly (100) is inserted in the hole (800) and a longitudinal force (F) is applied to the stem (102) in a direction away from the head (106), the sleeve (104) is deformed by the plugging portion (400) until the stem (102) breaks at the weakened portion (200).

2. The sealing plug assembly (100) according to claim 1 wherein the sleeve gripping portion (402) comprises a first stem gripping surface (304) between the weakened portion (200) and the tail (108).

3. The sealing plug assembly (100) according to claim 2 wherein the first stem gripping surface (304) comprises at least one tapered surface increasing in diameter in a direction towards the head (106).

4. The sealing plug assembly (100) according to claim 3 wherein the at least one tapered surface comprises a first tapered surface (406) and a second tapered surface (408) wherein the first tapered surface (406) has a different inclination with respect to a longitudinal axis (A-A) of the stem (102) from the second tapered surface (408).

5. The sealing plug assembly (100) according to any of claims 1 to 4 wherein the sleeve gripping portion (402) comprises a second stem gripping surface between the weakened portion (200) and the head (106).

6. The sealing plug assembly (100) according to claim 5 wherein the second stem gripping surface comprises at least one third tapered surface (412) decreasing in diameter in a direction towards the head (106).

7. The sealing plug assembly (100) according to claim 6 when dependent on any of claims 2 to 4 wherein a maximum diameter (d₄) of the second stem gripping surface is less than a maximum diameter (d₆) of the first stem gripping surface (304).

8. The sealing plug assembly (100) according to any of the preceding claims wherein an annular recess (504) is between the stem (102) and the sleeve (104) configured to receive deformed sleeve material.

9. The sealing plug assembly (100) according to any of the preceding claims wherein the plugging portion (400) comprises a tapered lead-on plugging portion (414) increasing in diameter towards the head (106).

10. The sealing plug assembly (100) according to any of the preceding claims wherein the plugging portion (400) comprises the cylindrical plugging portion having a cylindrical plugging surface (418) and a tapered flank surface (420) is connected between the cylindrical plugging surface (418) and the head (106).

11. The sealing plug assembly (100) according to any of the preceding claims wherein the sleeve gripping portion (402) is arranged to deform and increase an outer diameter (d₁₁) of an adjacent sleeve portion (500) when the sleeve gripping portion (402) has an interference fit with the second bore portion (208).

12. The sealing plug assembly (100) according to any of the preceding claims wherein the sleeve (104) is configured to deform axially and radially when the longitudinal force (F) is applied to the stem (102) in a direction away from the head (106).

13. The sealing plug assembly (100) according to any of the preceding claims wherein the second bore portion (208) comprises a counterbore (215) at an end of the sleeve (104).

14. The sealing plug assembly (100) according to any of the preceding claims wherein the stem (102) comprises steel and the sleeve (104) comprises aluminium.

15. The sealing plug assembly (100) according to any of the preceding claims wherein the stem (102) and the sleeve (104) are configured to be sub-flush in the hole (800) after the stem (102) breaks at the weakened portion (200).

16. A method of manufacturing a sealing plug assembly (100) according to any of claims 1 to 15 comprising:
forming the stem (102) and the sleeve (104);
push-fitting the sleeve (104) on the stem (102) such that the sleeve gripping portion (402) is in an interference fit with the second bore portion (208).

17. A method of sealing a hole (800) in a workpiece (802) comprising:
inserting a sealing plug assembly (100) according to any of claims 1 to 15 into the hole (800) in the workpiece (802);
applying a longitudinal force (F) on the stem (102) in a direction away from the head (106);
deforming the sleeve (104) in the hole (800); and
breaking the stem (102) at the weakened portion (200).

## Patentansprüche

1. Verschlussstopfenanordnung (100) zum Verschließen eines Lochs (800) in einem Werkstück (802), umfassend:
einen Schaft (102), der einen Kopf (106) und ein Endstück (108) aufweist und einen geschwächten Abschnitt (200), der sich zwischen dem Kopf (106) und dem Endstück (108) befindet, und
eine Hülse (104), die auf dem Schaft (102) montierbar ist und eine Innenbohrung (204) aufweist, die einen ersten Bohrungsabschnitt (206) und einen zweiten Bohrungsabschnitt (208) aufweist, wobei der erste Bohrungsabschnitt (206) einen ersten Bohrungsdurchmesser (d₉) aufweist, der größer als ein zweiter Bohrungsdurchmesser (d10) des zweiten Bohrungsabschnitts (208) ist; wobei:
der Schaft (102) einen Stopfenabschnitt (400) aufweist, der einen zylindrischen Stopfenabschnitt (418) umfasst, der einen ersten Schaftdurchmesser (d₂) aufweist, zwischen dem Kopf (106) und dem geschwächten Abschnitt (200) und wobei der Schaft (102) weiter einen Hülsengreifabschnitt (402) aufweist, der einen zweiten Schaftdurchmesser (d₆) angrenzend an den geschwächten Abschnitt (200) aufweist, wobei der erste Schaftdurchmesser (d₂) größer als der zweite Schaftdurchmesser (d₆) ist;
wobei der erste Schaftdurchmesser (d₂) kleiner als der erste Bohrungsdurchmesser (d₉) ist und mindestens ein Abschnitt des zylindrischen Stopfenabschnitts (418) so angeordnet ist, dass er in dem ersten Bohrungsabschnitt (206) aufgenommen wird, und der zweite Schaftdurchmesser (d₆) größer als der zweite Bohrungsdurchmesser (d10) ist und der Hülsengreifabschnitt (402) so angeordnet ist, dass er in einem Presssitz in dem zweiten Bohrungsabschnitt (208) aufgenommen wird;
wobei, wenn die Verschlussstopfenanordnung (100) in das Loch (800) eingeführt wird und eine Längskraft (F) auf den Schaft (102) in einer Richtung weg vom Kopf (106) ausgeübt wird, die Hülse (104) durch den Stopfenabschnitt (400) verformt wird, bis der Schaft (102) an dem geschwächten Abschnitt (200) bricht.

2. Verschlussstopfenanordnung (100) nach Anspruch 1, wobei der Hülsengreifabschnitt (402) eine erste Schaftgreiffläche (304) zwischen dem geschwächten Abschnitt (200) und dem Endstück (108) umfasst.

3. Verschlussstopfenanordnung (100) nach Anspruch 2, wobei die erste Schaftgreiffläche (304) mindestens eine verjüngte Fläche umfasst, deren Durchmesser in Richtung auf den Kopf (106) zunimmt.

4. Verschlussstopfenanordnung (100) nach Anspruch 3, wobei die mindestens eine verjüngte Fläche eine erste verjüngte Fläche (406) und eine zweite verjüngte Fläche (408) umfasst, wobei die erste verjüngte Fläche (406) eine andere Neigung in Bezug auf eine Längsachse (A-A) des Schafts (102) aufweist als die zweite verjüngte Fläche (408).

5. Verschlussstopfenanordnung (100) nach einem der Ansprüche 1 bis 4, wobei der Hülsengreifabschnitt (402) eine zweite Schaftgreiffläche zwischen dem geschwächten Abschnitt (200) und dem Kopf (106) umfasst.

6. Verschlussstopfenanordnung (100) nach Anspruch 5, wobei die zweite Schaftgreiffläche mindestens eine dritte verjüngte Fläche (412) umfasst, die im Durchmesser in Richtung auf den Kopf (106) abnimmt.

7. Verschlussstopfenanordnung (100) nach Anspruch 6, wenn sie von einem der Ansprüche 2 bis 4 abhängig ist, wobei ein maximaler Durchmesser (d₄) der zweiten Schaftgreiffläche kleiner ist als ein maximaler Durchmesser (d₆) der ersten Schaftgreiffläche (304).

8. Verschlussstopfenanordnung (100) nach einem der vorstehenden Ansprüche, wobei eine ringförmige Aussparung (504) zwischen dem Schaft (102) und der Hülse (104) konfiguriert ist, um verformtes Hülsenmaterial aufzunehmen.

9. Verschlussstopfenanordnung (100) nach einem der vorstehenden Ansprüche, wobei der Stopfenabschnitt (400) einen verjüngten Anschlussstopfenabschnitt (414) umfasst, der zum Kopf (106) hin im Durchmesser zunimmt.

10. Verschlussstopfenanordnung (100) nach einem der vorstehenden Ansprüche, wobei der Stopfenabschnitt (400) den zylindrischen Stopfenabschnitt umfasst, der eine zylindrische Stopfenfläche (418) aufweist, und eine verjüngte Flankenfläche (420) zwischen der zylindrischen Stopfenfläche (418) und dem Kopf (106) verbunden ist.

11. Verschlussstopfenanordnung (100) nach einem der vorstehenden Ansprüche, wobei der Hülsengreifabschnitt (402) so angeordnet ist, dass er sich verformt und einen Außendurchmesser (d₁₁) eines angrenzenden Hülsenabschnitts (500) vergrößert, wenn der Hülsengreifabschnitt (402) einen Presssitz mit dem zweiten Bohrungsabschnitt (208) aufweist.

12. Verschlussstopfenanordnung (100) nach einem der vorstehenden Ansprüche, wobei die Hülse (104) so konfiguriert ist, dass sie sich axial und radial verformt, wenn die Längskraft (F) auf den Schaft (102) in einer Richtung weg vom Kopf (106) aufgebracht wird.

13. Verschlussstopfenanordnung (100) nach einem der vorstehenden Ansprüche, wobei der zweite Bohrungsabschnitt (208) eine Gegenbohrung (215) an einem Ende der Hülse (104) umfasst.

14. Verschlussstopfenanordnung (100) nach einem der vorstehenden Ansprüche, wobei der Schaft (102) Stahl umfasst und die Hülse (104) Aluminium umfasst.

15. Verschlussstopfenanordnung (100) nach einem der vorstehenden Ansprüche, wobei der Schaft (102) und die Hülse (104) so konfiguriert sind, dass sie nach dem Bruch des Schaftes (102) an dem geschwächten Abschnitt (200) in dem Loch (800) sub-bündig sind.

16. Verfahren zur Herstellung einer Verschlussstopfenanordnung (100) nach einem der Ansprüche 1 bis 15, umfassend:
Bilden des Schaftes (102) und der Hülse (104);
Presseinpassen der Hülse (104) auf den Schaft (102), so dass der Hülsengreifabschnitt (402) in einem Presssitz mit dem zweiten Bohrungsabschnitt (208) ist.

17. Verfahren zum Verschließen eines Lochs (800) in einem Werkstück (802), umfassend:
Einführen einer Verschlussstopfenanordnung (100) nach einem der Ansprüche 1 bis 15 in das Loch (800) im Werkstück (802);
Aufbringen einer Längskraft (F) auf den Schaft (102) in einer Richtung weg vom Kopf (106);
Verformen der Hülse (104) im Loch (800); und Brechen des Schaftes (102) an dem geschwächten Abschnitt (200).

## Revendications

1. Ensemble bouchon d'étanchéité (100) destiné à sceller un trou (800) dans une pièce (802) comprenant :
une tige (102) présentant une tête (106) et une queue (108) et une portion affaiblie (200) située entre la tête (106) et la queue (108) et
un manchon (104) pouvant être monté sur la tige (102) et présentant un alésage interne (204) présentant une première portion d'alésage (206) et une seconde portion d'alésage (208), dans lequel la première portion d'alésage (206) présente un premier diamètre d'alésage (d₉) supérieur à un second diamètre d'alésage (d10) de la seconde portion d'alésage (208) ; dans lequel :
la tige (102) présente une portion de bouchage (400), qui comprend une portion de bouchage cylindrique (418) présentant un premier diamètre de tige (d₂), entre la tête (106) et la portion affaiblie (200) et dans lequel en outre la tige (102) présente une portion de préhension de manchon (402) présentant un second diamètre de tige (d₆) adjacente à la portion affaiblie (200), dans lequel le premier diamètre de tige (d₂) est supérieur au second diamètre de tige (d₆);
dans lequel le premier diamètre de tige (d₂) est inférieur au premier diamètre d'alésage (d₉) et au moins une portion de la portion de bouchage cylindrique (418) est agencée pour être reçue dans la première portion d'alésage (206) et le second diamètre de tige (d₆) est supérieur au second diamètre d'alésage (d10) et la portion de préhension de manchon (402) est agencée pour être reçue en ajustement serré dans la seconde portion d'alésage (208) ;
dans lequel, lorsque l'ensemble bouchon d'étanchéité (100) est inséré dans le trou (800) et qu'une force longitudinale (F) est appliquée à la tige (102) dans une direction s'éloignant de la tête (106), le manchon (104) est déformé par la portion de bouchage (400) jusqu'à ce que la tige (102) se casse au niveau de la portion affaiblie (200).

2. Ensemble bouchon d'étanchéité (100) selon la revendication 1, dans lequel la portion de préhension de manchon (402) comprend une première surface de préhension de tige (304) entre la portion affaiblie (200) et la queue (108).

3. Ensemble bouchon d'étanchéité (100) selon la revendication 2, dans lequel la première surface de préhension de tige (304) comprend au moins une surface conique dont le diamètre augmente dans une direction vers la tête (106).

4. Ensemble bouchon d'étanchéité (100) selon la revendication 3, dans lequel la au moins une surface conique comprend une première surface conique (406) et une deuxième surface conique (408), dans lequel la première surface conique (406) présente une inclinaison différente par rapport à un axe longitudinal (A-A) de la tige (102) de celle de la deuxième surface conique (408).

5. Ensemble bouchon d'étanchéité (100) selon l'une quelconque des revendications 1 à 4, dans lequel la portion de préhension de manchon (402) comprend une seconde surface de préhension de tige entre la portion affaiblie (200) et la tête (106).

6. Ensemble bouchon d'étanchéité (100) selon la revendication 5, dans lequel la seconde surface de préhension de tige comprend au moins une troisième surface conique (412) dont le diamètre diminue dans une direction vers la tête (106).

7. Ensemble bouchon d'étanchéité (100) selon la revendication 6 lorsqu'elle dépend de l'une quelconque des revendications 2 à 4, dans lequel un diamètre maximal (d₄) de la seconde surface de préhension de tige est inférieur à un diamètre maximal (d₆) de la première surface de préhension de tige (304).

8. Ensemble bouchon d'étanchéité (100) selon l'une quelconque des revendications précédentes, dans lequel un évidement annulaire (504) est situé entre la tige (102) et le manchon (104) configuré pour recevoir le matériau de manchon déformé.

9. Ensemble bouchon d'étanchéité (100) selon l'une quelconque des revendications précédentes, dans lequel la portion de bouchage (400) comprend une portion de bouchage conique en entrée (414) dont le diamètre augmente vers la tête (106).

10. Ensemble bouchon d'étanchéité (100) selon l'une quelconque des revendications précédentes, dans lequel la portion de bouchage (400) comprend la portion de bouchage cylindrique présentant une surface de bouchage cylindrique (418) et une surface de flanc conique (420) est connectée entre la surface de bouchage cylindrique (418) et la tête (106).

11. Ensemble bouchon d'étanchéité (100) selon l'une quelconque des revendications précédentes, dans lequel la portion de préhension de manchon (402) est agencée pour déformer et augmenter un diamètre extérieur (d₁₁) d'une portion de manchon adjacente (500) lorsque la portion de préhension de manchon (402) présente un ajustement serré avec la seconde portion d'alésage (208).

12. Ensemble bouchon d'étanchéité (100) selon l'une quelconque des revendications précédentes, dans lequel le manchon (104) est configuré pour se déformer axialement et radialement lorsque la force longitudinale (F) est appliquée à la tige (102) dans une direction s'éloignant de la tête (106).

13. Ensemble bouchon d'étanchéité (100) selon l'une quelconque des revendications précédentes, dans lequel la seconde portion d'alésage (208) comprend un contre-alésage (215) à une extrémité du manchon (104).

14. Ensemble bouchon d'étanchéité (100) selon l'une quelconque des revendications précédentes, dans lequel la tige (102) comprend de l'acier et le manchon (104) comprend de l'aluminium.

15. Ensemble bouchon d'étanchéité (100) selon l'une quelconque des revendications précédentes, dans lequel la tige (102) et le manchon (104) sont configurés pour être sous-affleurants dans le trou (800) après que la tige (102) se soit cassée au niveau de la portion affaiblie (200).

16. Procédé de fabrication d'un ensemble bouchon d'étanchéité (100) selon l'une quelconque des revendications 1 à 15, comprenant :
la formation de la tige (102) et du manchon (104) ;
l'enfoncement du manchon (104) sur la tige (102) de sorte que la portion de préhension de manchon (402) soit en ajustement serré avec la seconde portion d'alésage (208).

17. Procédé de scellement d'un trou (800) dans une pièce (802) comprenant :
l'insertion d'un ensemble bouchon d'étanchéité (100) selon l'une quelconque des revendications 1 à 15 dans le trou (800) de la pièce (802) ;
l'application d'une force longitudinale (F) sur la tige (102) dans une direction s'éloignant de la tête (106) ;
la déformation du manchon (104) dans le trou (800) ; et la rupture de la tige (102) au niveau de la portion affaiblie (200).
